# FASCICULE DE BREVET EUROPEEN

(11) **EP 3 017 857 B1**
(45) Date de publication et mention de la délivrance du brevet: **13.03.2019**
(21) Numéro de dépôt: 15306672.5
(22) Date de dépôt: 19.10.2015
(51) Int. Cl.: B01D 53/14, B01D 53/18

(54) **PROCÉDÉ DE DESACIDIFICATION D'UN EFFLUENT GAZEUX PAR UNE SOLUTION ABSORBANTE AVEC INJECTION DE VAPEUR DANS LA SOLUTION ABSORBANTE RÉGÉNÉRÉE ET DISPOSITIF POUR SA MISE EN OEUVRE**
ENTSÄUERUNGSVERFAHREN VON GASHALTIGEN ABWÄSSERN MIT HILFE EINER ABSORBIERENDEN LÖSUNG MIT DAMPFEINSPRITZUNG IN DIE REGENERIERTE ABSORBIERENDE LÖSUNG, UND VORRICHTUNG FÜR DIE UMSETZUNG DIESES VERFAHRENS
METHOD FOR DEACIDIFYING A GASEOUS EFFLUENT WITH AN ABSORBENT SOLUTION WITH STEAM INJECTION IN THE REGENERATED ABSORBENT SOLUTION AND DEVICE FOR IMPLEMENTING SAME

(30) Priorité: 04.11.2014 FR 1460635
(43) Date de publication de la demande: 11.05.2016
(73) Titulaire: IFP Energies nouvelles, 92500 Rueil-Malmaison (FR)
(72) Inventeur: RAYNAL, Ludovic, 69600 Oullins (FR); DREILLARD, Matthieu, 69003 Lyon (FR)
(74) Mandataire: IFP Energies nouvelles

(56) Documents cités:
- WO-A1-2011/095703
- WO-A1-2012/067101
- WO-A1-2013/132962
- FR-A1- 2 898 284
- FR-A1- 2 965 732

## Description

### Domaine de l'invention

La présente invention concerne le domaine de la désacidification d'un gaz au moyen d'une solution absorbante, par exemple la décarbonatation des fumées de combustion ou la désacidification de gaz naturel ou d'origine industrielle.

### Contexte général

On utilise couramment des procédés de désacidification de gaz mettant en oeuvre des solutions aqueuses d'amines pour retirer les composés acides présents dans un gaz, notamment le dioxyde de carbone (CO₂), l'hydrogène sulfuré (H₂S), l'oxysulfure de carbone (COS), le disulfure de carbone (CS₂), le dioxyde de soufre (SO₂) et les mercaptans (RSH) tel que le méthylmercaptan (CH₃SH), l'éthylmercaptan (CH₃CH₂SH) et le propylmercaptan (CH₃CH₂CH₂SH). Le gaz est désacidifié par mise en contact avec la solution absorbante, puis la solution absorbante est régénérée thermiquement.

Dans le domaine de l'énergie par exemple, la combustion des ressources fossiles conduisant au rejet de CO₂ dans l'atmosphère constitue un problème majeur, l'augmentation du CO₂ dans l'atmosphère étant reconnue comme contribuant au réchauffement climatique mondial. Pour réduire ce type d'émission, une solution consiste à capter puis stocker le CO₂ émis par combustion, notamment dans des centrales électriques utilisant du charbon. Un procédé de captage du CO₂ sépare le CO₂ des autres constituants des fumées issues de la combustion des ressources fossiles, et permet ainsi de transporter le CO₂ sous forme concentrée dans un lieu de stockage souterrain. De cette façon, le CO₂ est séquestré dans le réservoir souterrain au lieu d'être rejeté dans l'atmosphère.

Un procédé de référence à ce jour pour capter le CO₂ consiste à laver les fumées de combustion au moyen d'une solution absorbante basique, par exemple une solution aqueuse de monoethanolamine. La solution basique circule entre deux colonnes. L'une fonctionne à basse température et permet le lavage du gaz par l'absorption des espèces acides contenues dans le gaz, tel que le CO₂, mais également l'H₂S, le SO₂, le COS, etc. L'autre fonctionne à haute température et permet de régénérer la solution absorbante en libérant les espèce acides contenues qu'elle contient. L'augmentation de température dans la seconde colonne est due au chauffage de la solution absorbante, en fond de régénérateur, par l'utilisation d'un moyen de chauffage, en général de la vapeur d'eau.

Un inconvénient de ce type de procédé de désacidification réside dans leur consommation élevée d'énergie. Dans une centrale électrique par exemple, l'installation d'un procédé de captage de CO₂ réduit le rendement énergétique dans la centrale : une partie de l'énergie produite par la combustion des ressources fossiles est consommée par l'unité de captage et ne sert plus à la production d'électricité.

Il est ainsi primordial de minimiser la consommation énergétique de tels procédés, en particulier la consommation énergétique liée à la régénération de la solution absorbante.

Récemment, il a été proposé d'utiliser des solutions absorbantes présentant la propriété de former deux phases liquides qui peuvent être non miscibles selon les conditions de température ou de taux de charge en CO₂. Un tel phénomène de fractionnement de la solution en deux phases non miscibles est également appelé phénomène de démixtion. Les brevets FR 2,898,284 et EP1656983 ainsi que la publication WO2011/095703 A1 décrivent par exemple des procédés mettant en oeuvre ce type de solutions absorbantes. Dans ces procédés, une régénération fractionnée est réalisée, consistant à ne régénérer qu'une partie de la solution absorbante issue d'une étape de séparation de la solution en deux phases liquides en amont de la colonne de régénération. Ainsi, une telle régénération fractionnée permet de baisser la dépense énergétique liée à la régénération.

Cependant, un problème lié à l'utilisation de telles solutions est qu'une séparation de phases non souhaitée dans la colonne de régénération peut se produire, néfaste aux performances du procédé. En effet, le taux de partage entre les deux phases dépend de la température et aussi parfois du taux de charge en CO₂. Ainsi, si une partie importante de la séparation des phases peut effectivement être réalisée à une étape intermédiaire située entre les colonnes d'absorption et de régénération, il est fortement probable qu'une nouvelle séparation se produise au sein de la colonne de régénération. Lors de l'étape intermédiaire de séparation des phases, la température est plus faible et le taux de charge en CO₂ plus important que ce qui est obtenu en fond de colonne de régénération. Les propriétés physico-chimiques de la portion du fluide issue de l'étape de séparation intermédiaire, en général la phase lourde obtenue par décantation, évoluent quand la portion de fluide passe du ballon de décantation à la colonne de régénération. De fluide homogène, la portion de fluide peut se diviser à nouveau en deux phases non miscibles dans la colonne de régénération, et le fluide obtenu en fond de colonne peut décanter. Deux phases se forment l'une au-dessus de l'autre, comme lors de l'étape de séparation par décantation entre les colonnes d'absorption et de régénération, mais avec des propriétés de répartition différentes entre les phases. Cette démixtion représente un risque de mauvaise opération du procédé : classiquement, le fluide est pompé à partir du fond de la colonne de régénération, afin d'être envoyé vers la colonne d'absorption et utilisé à nouveau pour l'absorption des composés acides. S'il y a décantation en fond de colonne, seule la phase lourde est pompée, la phase légère s'accumulant au-dessus. La solution absorbante régénérée envoyée vers l'absorbeur est donc démunie de sa phase légère, avec laquelle la solution absorbante serait repassée à un état monophasique lors de son refroidissement. Par conséquent, la solution absorbante en entrée de colonne d'absorption n'a pas les concentrations en produits chimiques attendues et le procédé est moins performant.

Une solution pour éviter le phénomène de décantation en fond de colonne pourrait consister à effectuer une recirculation liquide en fond de colonne à l'aide d'une pompe. Avec un taux de recycle suffisant, un brassage liquide satisfaisant pourrait être obtenu pour éviter une décantation des phases. Cependant une telle solution, mettant en oeuvre une pompe pour la recirculation liquide, serait couteuse en termes d'investissement matériel et d'opération, notamment si le taux de recycle liquide est important.

### Objectifs et résumé de l'invention

La présente invention vise à apporter une solution au problème de ségrégation de phases d'une solution absorbante démixante en fond de régénérateur.

La présente invention vise plus généralement à fournir un dispositif et un procédé de désacidification d'un effluent gazeux au moyen d'une solution absorbante permettant de minimiser l'énergie de régénération de la solution absorbante, ainsi que les coûts d'investissements et d'opération liés à cette régénération, tout en assurant que la composition de la solution absorbante régénérée qui alimente la colonne d'absorption ne varie pas significativement dans le temps, de manière à assurer de bonnes performances du procédé en termes de quantité de composés acides absorbés.

La présente invention propose de mettre en oeuvre une injection originale de la vapeur produite par un rebouilleur en fond de colonne de régénération, afin de générer un mouvement d'ensemble de la solution absorbante en fond de colonne et assurer ainsi un bon mélange des phases.

Pour atteindre au moins l'un des objectifs susvisés, parmi d'autres, la présente invention propose, selon un premier aspect, un procédé de désacidification d'un effluent gazeux comportant des composés acides, tels que du CO₂ et/ou de l'H₂S, dans lequel :
a) on met en contact l'effluent gazeux avec une solution absorbante dans une colonne d'absorption, de manière à obtenir un effluent gazeux appauvri en composés acides et une solution absorbante chargée en composés acides, la solution absorbante étant choisie pour sa propriété à former deux phases liquides séparables lorsqu'elle a absorbé une quantité de composés acides et qu'elle est chauffée,
b) on sépare la solution absorbante chargée en composés acides en une première fraction liquide appauvrie en composés acides et en une deuxième fraction liquide enrichie en composés acides,
c) on régénère la deuxième fraction liquide dans une colonne de régénération de manière à libérer une partie des composés acides et à obtenir une solution absorbante régénérée, par une injection de vapeur issue de la vaporisation partielle dans un rebouilleur d'une première partie de la solution absorbante régénérée soutirée de la colonne de régénération, ladite injection de vapeur étant réalisée dans un réservoir de liquide formé par une deuxième partie de la solution absorbante régénérée situé en fond de la colonne de régénération de manière à assurer un brassage de ladite deuxième partie de la solution absorbante régénérée,
d) on recycle la première fraction liquide obtenue à l'étape b) et la solution absorbante régénérée obtenue à l'étape c), en tant que solution absorbante à l'étape a).
La vapeur est de préférence injectée au fond du réservoir de liquide.

La première partie de la solution absorbante régénérée peut être soutirée d'un plateau situé au-dessus du réservoir de liquide.

Avantageusement, la vapeur est injectée dans le réservoir de liquide à une vitesse superficielle comprise entre 1 cm/s et 1 m/s.

La vapeur est préférentiellement injectée dans le réservoir de liquide à une vitesse superficielle donnée, et on peut contrôler ladite vitesse superficielle en séparant la solution absorbante partiellement vaporisée issue du rebouilleur en un premier flux constituant la vapeur injectée dans le réservoir de liquide et en un deuxième flux de vapeur injectée au-dessus du réservoir de liquide, et en régulant lesdits premier et deuxième flux.

Avantageusement, la circulation de la solution absorbante régénérée entre la colonne de régénération et le rebouilleur est assurée par un effet de thermosiphon.

On peut dans ce cas réguler l'effet de thermosiphon en faisant varier une première hauteur H₁ définie par la différence de niveau entre un plateau de soutirage duquel est soutiré la première partie de la solution absorbante régénérée et le sommet du réservoir de liquide, et/ou en faisant varier une deuxième hauteur H₂ définie par la différence de niveau entre le point d'injection de la vapeur dans le réservoir de liquide et le point d'injection de ladite première partie de la solution absorbante régénérée dans le rebouilleur.

Préalablement à l'étape de séparation b), on peut chauffer la solution absorbante chargée en composés acides, de préférence à une température comprise entre 60°C et 140°C, de manière à ce que la solution absorbante forme deux fractions liquides séparables.

La solution absorbante peut comprendre entre 10 % et 90 % en poids d'au moins un composé réactif réagissant avec au moins un desdits composés acides, et entre 10 % et 90 % en poids d'eau.

Le composé réactif peut être une amine, de préférence choisie dans le groupe constitué par la N,N,N',N'-Tétraméthylhexane-1,6-diamine (TMHDA), la N,Ndiethylethanolamine (DEEA), la N,N,N',N'-TetraEthylDiEthyleneTriAmine (TEDETA), la N,N,N'-TriEthylEthyleneDiAmine (TEEDA), la N-DiisoPropylEthyleneDiAmine (DIPEDA), la N,N,N',N'-TetraMethylDiPropyleneTriAmine (TMDPTA), la N,N,N',N',N"-PentaMethylDiPropyleneTriAmine (PMDPTA).

L'effluent gazeux peut être choisi parmi le gaz naturel, les gaz de synthèse, les fumées de combustion, les fumées de hauts-fourneaux, les gaz de raffinerie tels que le gaz de synthèse, les gaz produits par craquage, les gaz combustibles, les gaz acides issus d'une unité aux amines, les gaz issus d'une unité de réduction en queue du procédé Claus, les gaz de fermentation de biomasse, les gaz de cimenterie, les fumées d'incinérateur.

Le procédé selon l'invention est avantageusement mis en oeuvre pour le captage du CO₂, de préférence contenu dans des fumées de combustion.

L'invention porte, selon un deuxième aspect, sur un dispositif de désacidification d'un effluent gazeux comportant des composés acides, tels que du CO₂ et/ou de l'H₂S, pour mettre en oeuvre le procédé selon l'invention, comportant :
- une colonne d'absorption pour mettre en contact l'effluent gazeux avec une solution absorbante afin de produire un gaz désacidifié et une solution absorbante chargée en composés acides, la solution absorbante étant choisie pour sa propriété à former deux phases liquides séparables lorsqu'elle a absorbé une quantité de composés acides et qu'elle est chauffée ;
- des moyens de séparation pour séparer la solution absorbante chargée en composés acides en une première fraction liquide de solution absorbante appauvrie en composés acides et une deuxième fraction liquide de solution absorbante enrichie en composés acides ;
- une colonne de régénération pour libérer les composés acides contenus dans ladite deuxième fraction liquide et pour produire une solution absorbante régénérée, ladite colonne de régénération étant équipée d'au moins un rebouilleur pour former de la vapeur par vaporisation partielle d'une première partie de la solution absorbante régénérée soutirée de la colonne de régénération, et ladite colonne de régénération (G) comprenant un réservoir de liquide en fond de colonne formé par au moins une deuxième partie de la solution absorbante régénérée, et un injecteur de vapeur immergé dans le réservoir de liquide pour injecter la vapeur dans le réservoir ;
- des moyens pour recycler ladite première fraction liquide issue des moyens de séparation et la solution absorbante régénérée issue de la colonne de régénération en tant que solution absorbante dans la colonne d'absorption.

Selon un mode de réalisation, le dispositif comprend un plateau de soutirage positionné au-dessus du réservoir de liquide pour recueillir ladite première partie de la solution absorbante régénérée, et une conduite comportant une entrée débouchant au niveau dudit plateau pour envoyer ladite première partie de solution vers le rebouilleur.

Selon un mode de réalisation, le dispositif comprend une conduite principale reliant ledit rebouilleur audit injecteur de vapeur afin d'envoyer un premier flux de vapeur dans le réservoir de liquide, et une conduite de dérivation installée sur la conduite principale pour envoyer une deuxième flux de vapeur au-dessus du réservoir de liquide, la conduite de dérivation étant munie d'une vanne.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Brève description des figures

La figure 1 est un schéma d'une installation de désacidification d'un gaz selon l'invention.
La figure 2 est un schéma d'une colonne de régénération équipée d'un rebouilleur et munie d'un injecteur de vapeur selon l'invention.
La figure 3 est une vue schématique 3D d'un exemple d'injecteur de vapeur utilisé dans une colonne de régénération selon l'invention.

Sur les figures, les mêmes références désignent des éléments identiques ou analogues.

### Description de l'invention

Dans la présente description, le terme démixtion désigne le phénomène de séparation en deux phases liquides d'une solution absorbante liquide monophasique. Une solution absorbante est une solution apte à absorber des composés acides d'un effluent gazeux, tels que le CO₂, l'H₂S, le COS, le CS₂, le SO₂, les mercaptans, dans des conditions opératoires appropriées (température, pression, éléments physiques de mise en contact gaz/liquide). Les adjectifs démixant/démixante sont utilisés en référence au phénomène de démixtion. Une solution absorbante démixante est ainsi une solution absorbante capable de former deux phases liquides séparables lorsqu'elle comporte une quantité de composés acides.

### Installation et procédé de désacidification selon l'invention

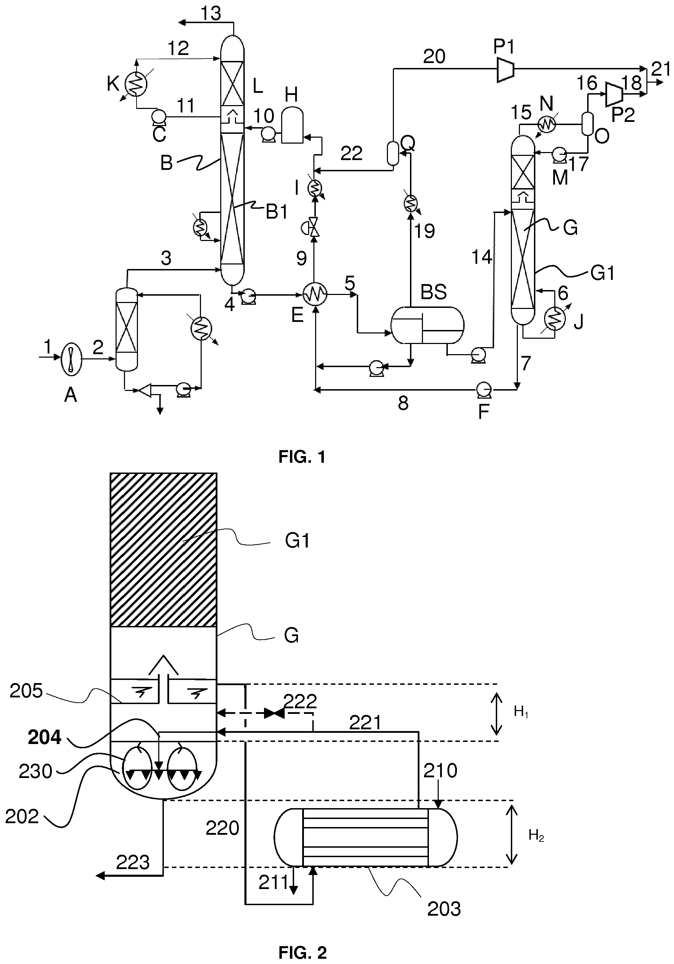

La figure 1 représente schématiquement une mise en oeuvre du procédé de désacidification selon l'invention, dans lequel une solution absorbante démixante est utilisée.

En particulier, l'exemple de mise en oeuvre choisi et représenté à la figure 1 est celui du captage de CO₂ de fumées de combustion.

Les fumées de combustion sont produites notamment par la combustion d'hydrocarbures, de biogaz, de charbon dans une chaudière ou pour une turbine à gaz de combustion, par exemple dans le but de produire de l'électricité. A titre d'illustration, on peut mettre en oeuvre un procédé de désacidification selon l'invention pour absorber au moins 70 %, de préférence au moins 80 %, voire au moins 90 % du CO₂ contenu dans les fumées de combustion. Ces fumées ont généralement une température comprise entre 20°C et 60°C, une pression comprise entre 1 et 5 bar et peuvent comporter entre 50 % et 80 % de diazote, entre 5 % et 40 % de dioxyde de carbone, entre 1 % et 20 % de dioxygène, et quelques impuretés comme des SOx et des NOx, s'ils n'ont pas été éliminés en amont du procédé de désacidification.

Le gaz arrive par le conduit 1 à pression atmosphérique, et à une température qui peut être comprise entre 20°C et 60°C.

Le gaz arrivant par le conduit 1 peut être comprimé par l'organe A, une soufflante ou un compresseur, assurant une augmentation de pression de l'ordre de 150 à 200 mbar. Cet organe A permet de compenser les pertes de charge rencontrées successivement dans unités en aval décrites plus bas, telles que la tour de refroidissement, la section d'absorption et la section de lavage.

Le gaz peut être envoyé par le conduit 2 dans une tour de refroidissement. Dans la tour de refroidissement est opéré un lavage à l'eau ayant pour principal objectif de refroidir, généralement pour atteindre une température comprise entre 40°C et 50°C, les fumées afin de favoriser thermodynamiquement l'absorption du CO₂ en fond de colonne d'absorption. Ce refroidissement par contact direct avec de l'eau peut également permettre d'abattre des particules résiduelles contenues dans les fumées, telles que des particules d'imbrûlés ou des poussières.

Le gaz est ensuite introduit par le conduit 3 débouchant en bas d'une colonne d'absorption B munie d'éléments de mise en contact entre gaz et liquide B1, par exemple des plateaux, des éléments de garnissage en vrac ou des éléments de garnissage structurés, formant une section d'absorption. Dans la section d'absorption, le gaz est mis en contact avec la solution absorbante arrivant par le conduit 10 en tête de la section d'absorption. Le gaz circule à contre-courant de la solution liquide : la solution absorbante s'écoule par gravité et croise les fumées montantes. La solution absorbante capte les composés acides, notamment le CO₂ contenu dans le gaz. Les éléments de mise en contact gaz/liquide B1, par exemple un garnissage, permettent d'offrir un maximum de surface d'échange entre le gaz et le liquide afin d'assurer une efficacité optimale de captage du CO₂. On évacue par le conduit 4 en fond de la colonne B une solution absorbante chargée en composés acides. On obtient un gaz désacidifié, c'est-à-dire appauvri en composés acides en tête de la section B1.

Le gaz désacidifié peut être en envoyé dans une section de lavage L en aval de la section B1, afin d'éliminer les composés chimiques issus de la solution absorbante qui sont passés dans le gaz désacidifié, par vaporisation ou par entrainement mécanique, tels que des amines, leurs produits de dégradation, ou d'autres composés organiques ou inorganiques. Cette section de lavage L peut également permettre de contrôler le bilan global en eau du procédé en régulant la température de sortie des fumées décarbonatées. Cette section de lavage est par exemple située dans la même colonne que la colonne d'absorption, et comporte des éléments de mise en contact entre gaz/ liquide, tels que des plateaux, des garnissages en vrac ou structurés. L'eau injectée en tête de la section de lavage circule à contre-courant du gaz désacidifié issu de la section d'absorption B. L'eau chargée en amine est récupérée en fond de la section de lavage L, par exemple au moyen d'un plateau séparateur P. Ladite eau est ensuite évacuée par le conduit 11 et pompée par la pompe C, puis refroidie dans l'échangeur K, par exemple en utilisant de l'eau du procédé, pour être ensuite réintroduite par le conduit 12 au sommet de la section de lavage L. Le gaz désacidifié, appauvri en composés chimiques issus de la solution absorbante est évacué au sommet de la colonne B par le conduit 13.

La solution absorbante évacuée par le conduit 4 en fond de la colonne d'absorption B est pompée, chauffée dans l'échangeur de chaleur E, puis envoyée par le conduit 5 dans un ballon de séparation BS, afin d'effectuer une séparation des différentes phases de la solution absorbante, notamment une séparation liquide/liquide de la solution absorbante qui comporte deux phases liquides non miscibles. Le phénomène de démixtion s'est produit en amont du ballon de séparation, soit en fond de colonne d'absorption, soit suite au chauffage dans l'échangeur de chaleur E qui permet de contrôler la démixtion en chauffant la solution au-delà de la température critique à laquelle la solution chargée en composés acides forme deux phases liquides séparables. Par exemple, la solution absorbante chargée en composés acides est chauffée à une température comprise entre 60°C et 140°C. Ainsi, le fluide circulant dans le conduit 5 est composé de deux phases liquides séparables : une phase riche en composés acides et une phase pauvre en composés acides. De plus, sous l'effet de la hausse de température, une partie des composés acides est libérée sous forme gazeuse. Les trois phases du fluide circulant dans le conduit 5 sont séparées dans le ballon de séparation BS1. La fraction gazeuse et la fraction liquide pauvre en composés acides sont évacuées en tête du ballon BS par le conduit 19, refroidies puis séparées dans un ballon Q. La fraction gazeuse issue du ballon Q est acheminée par le conduit 20 vers un compresseur P1 afin d'être évacuée par le conduit 21 avec le gaz acide refroidi et comprimé circulant dans le conduit 18 issu de la colonne de régénération G. La fraction liquide pauvre en composés acides est évacuée du ballon Q par le conduit 22 pour être recyclée dans la colonne d'absorption, et est de préférence mélangée avec le flux de solution absorbante régénérée provenant la colonne de régénération G, après passage de ce dernier dans l'échangeur de chaleur E.

La fraction de la solution absorbante riche en composés acides dans le ballon BS est pompée et dirigée par le conduit 14 en tête de la colonne de régénération G.

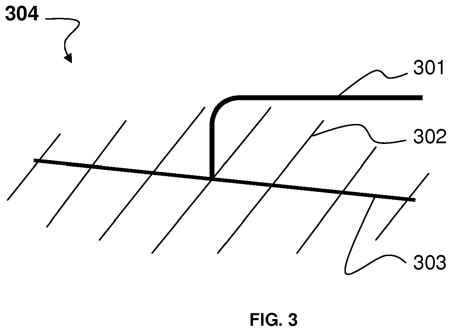

La colonne de régénération G est équipée d'éléments de séparation gaz/liquide G1, par exemple des plateaux, des garnissages en vrac ou structurés. Le fond de la colonne G est équipé d'un rebouilleur J qui apporte la chaleur nécessaire à la régénération en vaporisant une fraction de la solution absorbante réinjectée dans la colonne G par un conduit 6. Le fonctionnement du rebouilleur et l'injection originale de la solution absorbante sous forme de vapeur dans la colonne de régénération G est détaillé plus bas, en relation avec la description des figures 2 et 3. Dans la colonne de régénération G, sous l'effet de la mise en contact par les éléments G1 de la solution absorbante arrivant par le conduit 14 au sommet de la colonne avec la vapeur produite par le rebouilleur, les composés acides sont libérés sous forme gazeuse et évacués en tête de colonne par le conduit 15. Plusieurs rebouilleurs peuvent être utilisés pour la colonne de régénération afin de fournir l'énergie thermique nécessaire à la régénération.

Le flux gazeux riche CO₂ est partiellement liquéfié par refroidissement dans l'échangeur N puis introduit dans le séparateur O. Les condensats sont recyclés par le conduit 17 et la pompe M en tête de la colonne G à titre de reflux. Le gaz évacué en tête du ballon O par le conduit 16 peut être envoyé vers une autre installation pour être utilisé comme matière première et être ainsi valorisé ou bien être liquéfié, en vue d'être injecté dans un réservoir souterrain. Le gaz peut être comprimé par un organe P, puis déshydraté, pour obtenir un flux de CO₂ liquide à 110 bar environ et d'une très grande pureté évacué par le conduit 18, par exemple supérieure à 99% volume de CO₂.

La solution absorbante régénérée, c'est-à-dire appauvrie en composés acides, est évacuée en fond de la colonne G par le conduit 7, éventuellement pompée par une pompe F, et introduite par le conduit 8 dans l'échangeur de chaleur E pour être refroidie. La solution absorbante refroidie est évacuée par le conduit 9, éventuellement détendue puis à nouveau refroidie dans l'échangeur I, pour être ensuite mélangée avec la fraction de solution absorbante pauvre en composés acides amenée du ballon Q par le conduit 22. La solution absorbante formée par ce mélange est ensuite introduite dans le bac tampon H, permettant de stocker la solution et de réaliser d'éventuels appoints d'eau ou d'amines, avant d'être pompée pour être introduite par le conduit 10 dans la section d'absorption B1.

La régénération peut être effectuée à une pression dans la colonne G comprise entre 1 bar et 7 bar, voire jusqu'à 15 bar et à une température comprise entre 100°C et 200°C, de préférence comprise entre 110°C et 180°C, plus préférentiellement entre 120°C et 170°C. Par exemple, la température de régénération dans la colonne G est comprise entre 140°C et 180°C, et la pression de préférence comprise entre 5 et 8,5 bar dans le cas où l'on souhaite disposer de CO₂ sous pression pour une utilisation en aval ou comprimer les gaz acides en sortie de colonne de régénération à des pressions encore plus élevées, typiquement comprises entre 50 et 200 bar, notamment dans le but d'un stockage géologique. La température de régénération dans la colonne G est par exemple comprise entre 110°C et 135°C et la pression comprise entre 1,5 bar et 3 bar dans les cas où le gaz acide est envoyé à l'atmosphère en sortie de colonne de régénération ou dans un procédé de traitement aval ne nécessitant pas une pression élevée, comme un procédé Claus ou un procédé de traitement de gaz de queue.

L'installation de désacidification selon l'invention peut comprendre plusieurs colonnes d'absorption en parallèle et/ou colonnes de régénération en parallèle afin par exemple de répondre aux exigences relatives aux quantités de gaz à traiter et aux spécifications de dimensionnement des unités.

La figure 2 représente schématiquement, en coupe, le système d'injection de vapeur issue du rebouilleur dans la colonne de régénération selon l'invention. Seule une partie de la colonne de régénération G, la partie basse, est représentée.

La colonne de régénération G comporte un réservoir de liquide 202, aussi appelé couramment garde hydraulique, situé en fond de colonne, qui est formé par la solution absorbante régénérée, et duquel celle-ci est soutirée par le conduit 223 pour être recyclée vers la colonne d'absorption B. La colonne G comporte également, entre cette garde hydraulique 202 et les éléments de mise en contact gaz/liquide G1, un plateau collecteur 205 de type plateau à phases séparées comportant des cheminées pour le passage de la phase vapeur, cheminées suffisamment hautes pour assurer la création d'une garde liquide permettant notamment le soutirage d'une fraction de la solution absorbante liquide régénérée qui est envoyée à un rebouilleur 203. Le liquide s'accumule en effet sur le plateau de soutirage 205, et un conduit 220 permet d'envoyer le liquide accumulé dans le rebouilleur 203, en vue de vaporiser partiellement ledit liquide et d'envoyer la vapeur ainsi formée dans la colonne de régénération pour apporter l'énergie thermique nécessaire à la régénération de la solution absorbante dans la colonne G.

Alternativement, la colonne de régénération G ne comporte pas de plateau 205, et le soutirage de la fraction de la solution absorbante régénérée envoyée au rebouilleur peut s'effectuer dans la partie supérieure de la garde hydraulique 202.

Un fluide chaud 210, généralement de la vapeur surchauffée, est envoyé au rebouilleur 203. A son passage dans le rebouilleur, le fluide est refroidi, la vapeur se condensant, libérant sa chaleur latente, et ledit fluide refroidi 211 sort du rebouilleur 203. Ainsi, l'énergie du fluide 210 est transférée à la fraction de la solution absorbante régénérée arrivant par le conduit 220, et vaporise partiellement ladite fraction de solution. On récupère alors, par un conduit 221 au sommet du rebouilleur, un flux composé d'une phase vapeur et d'une phase liquide, que l'on transfère en bas de la colonne de régénération G.

Traditionnellement, il est d'usage envoyer ce flux entre la garde hydraulique et le plateau dans une colonne de régénération classique. Dans ce cas, la phase liquide du flux tombe dans la garde hydraulique tandis que la phase vapeur monte vers le garnissage en traversant le plateau. Généralement, la circulation de la solution absorbante régénérée entre la colonne de régénération et le rebouilleur est assurée par un effet thermosiphon, c'est à dire que la différence de densité entre les flux de solution absorbante régénérée entrant et sortant du rebouilleur, combinée à la différence de hauteur entre les points de sortie et d'entrée dans la colonne de régénération desdits flux de solution absorbante régénérée permet une circulation du fluide sous la seule action de la gravité. Il n'y a alors pas nécessité d'installation d'une pompe sur le flux extrait de la colonne G allant au rebouilleur.

Un inconvénient majeur réside alors, avec ce schéma classique, dans le phénomène de démixtion qui peut avoir lieu au sein de la colonne de régénération, et plus particulièrement dans la garde liquide en fond de colonne, comme cela a déjà été décrit en introduction. Dans ce cas, deux phases liquides sont présentes en fond de colonne, de densités différentes, et forment deux couches disposées l'une au-dessus de l'autre. Par exemple, la phase liquide la plus dense qui se dépose au fond de la garde hydraulique comprend essentiellement de l'eau et est pauvre en composés réactifs, comme c'est le cas d'une solution absorbante aqueuse comprenant de la N,N,N',N'-Tétraméthylhexane-1,6-diamine en tant que composé réactif principal. Dans d'autres cas, la phase la plus lourde peut être inversement pauvre en eau et riche en composés réactifs. Dans tous les cas, ce phénomène de décantation en fond de la colonne de régénération est problématique pour le bon fonctionnement du procédé. La solution absorbante régénérée étant classiquement pompée à partir de cette garde hydraulique pour être recyclée dans la colonne d'absorption, le risque de mauvaise opération du procédé est élevé car seule l'une des deux phases liquides de la solution absorbante est soutirée, qui ne répond pas aux attentes en termes de composition, et donc de performances pour le procédé, pour réaliser l'absorption des composés acides dans la colonne d'absorption B.

Contrairement au schéma classique de régénération décrit ci-dessus, les inventeurs ont mis au point une injection spécifique du flux de solution absorbante régénérée issue du rebouilleur, permettant d'éviter qu'une décantation se produise dans la garde liquide en fond de la colonne de régénération G.

Selon l'invention, on prévoit un système d'injection 204 de la vapeur issue du rebouilleur qui envoie ladite vapeur dans la garde hydraulique 202 de la colonne de régénération G, de préférence en fond de cette garde hydraulique. L'injecteur 204 est ainsi au moins partiellement immergé dans la garde hydraulique 202, c'est-à-dire que la partie de l'injecteur d'où s'échappe la vapeur est immergée dans la garde hydraulique, de manière à ce que la vapeur soit injectée au sein de la garde hydraulique. L'injecteur 204 est connecté au conduit 221 par lequel arrive la fraction de solution absorbante régénérée partiellement vaporisée issue du rebouilleur, et donc composée d'une phase vapeur et d'une phase liquide. Le mouvement ascensionnel des bulles produites par cette injection induit un fort mouvement de convection du liquide. Dans des conditions appropriées de vitesses superficielles de gaz, des boucles de circulation 230 du liquide sont ainsi générées, et assurent un mélange des phases liquides en cas de démixtion de la solution absorbante, empêchant tout phénomène de décantation.

De préférence, la vitesse superficielle de gaz en fût vide est supérieure à 1 cm/s, de préférence supérieure à 5 cm/s, en encore plus préférentiellement supérieure à 10 cm/s, et inférieure à 1 m/s, de préférence inférieure à 50 cm/s, et plus préférentiellement inférieure à 30 cm/s. Par vitesse superficielle d'un gaz en fût vide, on entend le rapport entre le débit volumique de gaz aux conditions passant dans la section (m³/s) d'un conduit et la section du conduit (m²).

L'injection de vapeur telle que décrite permet donc d'assurer un brassage liquide suffisant pour qu'aucun phénomène de décantation ne survienne dans le réservoir de liquide.

Ainsi, l'injection de vapeur dans la garde hydraulique de la colonne de régénération selon l'invention permet que la solution absorbante régénérée soutirée du fond de la colonne soit bien composée des deux phases liquides mélangées, et qu'ainsi la composition de la solution absorbante régénérée qui alimente la colonne d'absorption ne varie pas significativement dans le temps de manière à assurer de bonnes performances du procédé en termes de quantité de composés acides absorbés. Par composition de la solution absorbante on fait référence ici à sa formulation chimique, notamment sa teneur en eau et en composés réactifs, indépendamment du taux de charge en composés acides de la solution.

Une conduite de dérivation 222 optionnelle, communément appelée ligne de by-pass, installée sur la conduite 221, et équipée d'une vanne, permet de ne pas réinjecter la totalité de la vapeur issue du rebouilleur en fond de garde hydraulique. Ce by-pass 222 est particulièrement avantageux pour régler la vitesse superficielle du gaz injecté en fond de garde hydraulique, notamment pour diminuer ladite vitesse si celle-ci était trop importante en cas de réinjection de la totalité de la vapeur par l'injecteur 204.

L'effet thermosiphon permet la circulation des flux de solution absorbante régénérée entrant et sortant du rebouilleur 203, et donc l'injection de vapeur dans la garde hydraulique. Il est ainsi possible d'éviter d'avoir recours à des systèmes de mise en circulation de type pompe, impliquant des investissements et des couts opératoires supplémentaires. Cet effet thermosiphon peut être avantageusement régulé en faisant varier la hauteur entre le niveau du plateau P duquel est soutiré le fraction de solution par le conduit 220, et le niveau de la garde hydraulique (niveau haut du liquide dans le fond de la colonne), référencé H₁ sur la figure 2, et/ou en faisant varier la hauteur H₂, telle que représentée dans la figure 2, entre le niveau du point d'injection de la vapeur dans la garde, c'est-à-dire le fond de la garde hydraulique, et le niveau du point d'introduction de la solution dans le rebouilleur, c'est-à-dire la base du rebouilleur. Par exemple, on peut augmenter la pression à l'injection de la vapeur dans la garde liquide en augmentant la hauteur H₁ et/ou la hauteur H₂.

Il est entendu que d'autres types de rebouilleur que celui décrit en relation avec la figure 2 peuvent être utilisés dans la présente invention. Ainsi, et sans être limitatif, des rebouilleurs de type thermosiphons verticaux, ou des rebouilleurs à faisceau immergé de type « kettle » peuvent être utilisés. Egalement, le rebouilleur peut fonctionner avec d'autres moyens que de la vapeur surchauffée pour apporter des calories et vaporiser la solution absorbante, tel que de l'électricité ou un fluide caloporteur différent de la vapeur surchauffée.

L'injection de vapeur dans la garde hydraulique peut se faire à l'aide de nombreux dispositifs connus d'injection de gaz pouvant être immergés et permettant de former des bulles, tels que ceux utilisés par exemple dans le domaine de la distillation, du transfert gaz-liquide dans les procédés de traitement du gaz ou du traitement des eaux (voir Ch.1 et Ch.9 de Roustan 2003, Transferts gaz-liquide dans les procédés de traitement des eaux et des effluents gazeux, Lavoisier Eds). Certains dispositifs de distribution de liquide existants peuvent être adaptés pour réaliser l'injection de gaz selon l'invention. Par exemple, le document commercial « Internais for packed columns » (Sulzer Chemtech, Commercial Brochure 22.51.06.40 - V.13) présente certains distributeurs de liquide dont la configuration générale pourrait être adaptée pour former l'injecteur selon l'invention, tel que le distributeur avec buses de pulvérisation en forme de râteau illustré en p.11. D'autres géométries pour le système de buses sont possibles, par exemple une disposition radiale à partir d'un conduit central, ou des buses annulaires. Il peut également être prévu dans le fond de la colonne, intégrés dans la paroi de la colonne à un niveau correspondant à la garde liquide, un ensemble de tubes comportant des orifices, relié à un système d'alimentation externe en périphérie de la colonne.

De préférence, l'injecteur 204 comporte un réseau de tuyaux sous pression, ces systèmes étant bien adaptés à des réalisations industrielles. Ces systèmes peuvent être sous la forme communément appelée de peigne ou râteau, tel que représenté à la figure 3, ou sous la forme d'agencements plus complexes tel que par exemple décrit dans le brevet US 4,308,855. Ce brevet, relatif à un tout autre domaine que celui de la désacidification de gaz, décrit par exemple une structure de distribution de bulles connectée à un conduit vertical dans lequel circule du gaz, permettant de former des bulles dans un liquide. La structure de distribution de bulles comprend un réseau de conduits circulaires de diamètres croissants, dont l'ensemble forme un disque, reliés entre eux par des conduits transversaux. Les conduits comportent une quantité importante de petits orifices distribués à leur surface pour le passage du gaz et la formation de bulles.

La figure 3 représente une vue 3D schématique d'un exemple d'injecteur de vapeur mis en oeuvre selon l'invention.

L'injecteur de vapeur 304 comporte un tube principal 303, dont le diamètre est choisi de manière à limiter les charges par friction, par exemple de telle sorte que les pertes de charge par friction soient inférieures à 0,4 bara, de préférence inférieures à 0,2 bara, et encore plus préférentiellement inférieures à 0,1 bara. Plusieurs tubes 302 sont connectés au tube principal 303, et ont un diamètre inférieur au tube principal 303. Les tubes 302 sont distribués transversalement le long du tube principal 303, pour former un réseau en forme de peigne ou de râteau. Le tube principal 303, positionné par exemple horizontalement au fond de la garde hydraulique, est connecté à un conduit 301 coudé 301 par lequel la vapeur issue du rebouilleur est acheminée. Les tubes 302 sont munis d'orifices pour la distribution du gaz et la formation de bulles dans le liquide où l'injecteur est immergé. Le diamètre des différents tubes, la taille des orifices et leur distribution sont choisis de manière à respecter la double contrainte de faible perte de charge et d'homogénéité de la distribution du gaz.

### Composition de la solution absorbante

La composition de la solution absorbante est choisie pour sa capacité à absorber les composés acides, et pour sa propriété à former deux phases liquides séparables quand elle a absorbée une quantité déterminée de composés acides, dans des conditions thermodynamiques déterminées.

On choisit un composé réactif, c'est-à-dire qui réagit avec au moins un des composés acides du gaz à traiter, ou un mélange de composés réactifs, qui, en phase aqueuse, présente la propriété de former deux phases liquides séparables lorsqu'il a absorbé une quantité déterminée de composés acides et lorsque la température est supérieure à une température critique.

La solution chargée en composés acides peut alors former, dans des conditions thermodynamiques appropriées, une première phase liquide comportant les molécules de la solution absorbante qui n'ont pas réagi avec les composés acides et une deuxième phase liquide comportant les molécules de la solution qui ont réagi avec les composés acides.

Ainsi, il peut être avantageusement mis à profit cette propriété de démixtion pour effectuer une séparation liquide/liquide de la solution suite à l'absorption des composés acides, afin de n'envoyer qu'une partie de la solution absorbante dans la colonne de régénération pour réaliser une régénération fractionnée, c'est-à-dire la régénération que d'une seule fraction de la solution absorbante, celle enrichie en molécules ayant réagi avec les composés acides, et ainsi diminuer la consommation énergétique liée à la régénération de la solution, tel que décrit ci-dessus en relation avec la figure 1.

Le phénomène de démixtion pour une solution absorbante donnée peut être induit par une augmentation du taux de charge de la solution absorbante et/ ou par une élévation de la température.

La nature des composés réactifs de la solution absorbante peut être choisie en fonction de la nature du ou des composés acides à éliminer pour permettre une réaction chimique réversible avec le ou les composés acides à traiter. La structure chimique des composés réactifs peut aussi être choisie de manière à obtenir par ailleurs une stabilité accrue de la solution absorbante dans les conditions d'utilisation.

Les composés réactifs peuvent être par exemple et de façon non limitative des amines (primaires, secondaires, tertiaires, cycliques ou non, aromatiques ou non, saturées ou non), des alcanolamines, des polyamines, des acides aminés, des sels alcalins d'acides aminés, des amides, des urées, des phosphates, des carbonates ou des borates de métaux alcalins.

De préférence, le composé réactif est une amine, choisie dans le groupe constitué par la N,N,N',N'-Tétraméthylhexane-1,6-diamine (TMHDA), la N,Ndiethylethanolamine (DEEA), la N,N,N',N'-TetraEthylDiEthyleneTriAmine (TEDETA), la N,N,N'-TriEthylEthyleneDiAmine (TEEDA), la N-DiisoPropylEthyleneDiAmine (DIPEDA), la N,N,N',N'-TetraMethylDiPropyleneTriAmine (TMDPTA), la N,N,N',N',N"-PentaMethylDiPropyleneTriAmine (PMDPTA).

On peut mettre en oeuvre une solution aqueuse comportant, en général entre 10% et 80%, de préférence entre 20% et 60%, de manière très préférée entre 30% et 50%, en poids de composé(s) réactif(s), de préférence d'au moins une amine.

Par solution aqueuse on entend une solution contenant au moins 10% en poids d'eau.

La solution absorbante peut contenir entre 10 % et 90 % poids d'eau, de préférence entre 40 % et 80 % poids d'eau, et de manière très préférée entre 50% et 70% d'eau.

La somme des fractions massiques exprimées en % poids des différents composés de la solution absorbante est égale à 100 % en poids de la solution absorbante.

La solution absorbante peut en outre comprendre un ou plusieurs composés contenant au moins une fonction amine primaire ou secondaire, en tant qu'activateur, permettant d'accélérer la cinétique d'absorption du CO₂ et, dans certains cas, du COS contenu dans le gaz à traiter. Par exemple, la solution absorbante comporte au moins 0,5 % poids, et jusqu'à une concentration de 30 % poids, de préférence inférieure à 15 % poids, de préférence inférieure à 10 % poids d'une telle amine primaire ou secondaire. Une liste non exhaustive de ces composés activateurs contenant au moins une fonction amine primaire ou secondaire qui peuvent entrer dans la formulation est donnée ci-après :
- MonoEthanolAmine,
- AminoEthylEthanolAmine,
- DiGlycolAmine,
- Pipérazine,
- N-(2-HydroxyEthyl)Pipérazine,
- N-(2-AminoEthyl)Pipérazine,
- N-MethylPipérazine,
- N-EthylPipérazine,
- N-PropylPipérazine,
- 1,6-HexaneDiAmine,
- 1,1,9,9-TetraMéthylDiPropylèneTriamine,
- Morpholine,
- Pipéridine,
- 3-(MetylAmino)PropylAmine,
- N-MethylBenzylAmine.

La solution absorbante peut aussi contenir d'autres composés organiques. La solution absorbante peut ainsi contenir un ou plusieurs composés supplémentaires non réactifs vis-à-vis des composés acides (couramment nommé "solvant physique"), de façon à favoriser la solubilité physique des composés acides à absorber. Par exemple la solution absorbante peut comporter entre 5% et 50% poids de solvant physique tel que des alcools, des éthers de glycol, des lactames, des pyrrolidones N-alkylées, des pipéridones N-alkylées, des cyclotétraméthylènesulfone, des N-alkylformamides, des N-alkylacétamides, des ethers-cétones ou des phosphates d'alkyles et leur dérivés. Ce composé supplémentaire peut être, par exemple et de façon non limitative, du méthanol, du tetraethylèneglycoldimethylether, du sulfolane, ou de la N-formyl morpholine.

La solution absorbante peut aussi comprendre un acide organique ou inorganique. Une liste non exhaustive de composés acides pouvant être utilisés à cet effet est donnée ci-dessous :
- acide formique
- acide oxalique
- acide acétique
- acide propanoique
- acide butanoique
- acide aminé (Glycine, Taurine, etc.)
- acide phosphorique
- acide phosphoreux
- acide pyrophosphorique
- acide sulfurique
- acide sulfureux
- acide nitreux
- acide chlorhydrique.

### Nature des effluents gazeux

Il est entendu que le gaz traité ne se limite pas à des fumées de combustion et que l'objectif visé n'est pas limité au captage de CO₂, tel que décrit en relation avec la figure 1. Ainsi, les effluents gazeux traités peuvent être du gaz naturel, des gaz de synthèse, des gaz de raffinerie tels que le gaz de synthèse, des gaz produits par craquage, des gaz combustibles couramment nommés "fuel gas" selon la terminologie anglo-saxonne, des gaz acides issus d'une unité aux amines, des gaz issus d'une unité de réduction en queue du procédé Claus, des gaz de fermentation de biomasse, des gaz de cimenteries ou d'usines de sidérurgie, des fumées d'incinérateur, ou des fumées de haut-fourneaux.

Ces effluents gazeux contiennent un ou plusieurs des composés acides suivants: du CO₂, de l'H₂S, des mercaptans dits RSH (par exemple le méthylmercaptan (CH₃SH), l'éthylmercaptan (CH₃CH₂SH), des propylmercaptans (C₃H₇SH), des butylmercaptans ((C₄H₉SH)), du COS, du CS₂, du SO₂.

Plus généralement que ce qui est décrit en relation avec la figure 1, le gaz à désacidifier entrant dans l'installation de désacidification peut avoir une pression comprise entre 1 et 200 bar absolu, et une température comprise entre 20°C et 100°C.

Le procédé de désacidification selon l'invention peut par exemple être mis en oeuvre pour désacidifier un gaz naturel. Le gaz naturel est constitué majoritairement d'hydrocarbures gazeux, mais peut contenir plusieurs des composés acides suivants : le CO₂, l'H₂S, des mercaptans (RSH), du COS, du CS₂. La teneur de ces composés acides est très variable et peut aller jusqu'à 70 % en volume pour le CO₂ et jusqu'à 40 % en volume pour l'H₂S. La température du gaz naturel peut être comprise entre 20°C et 100°C. La pression du gaz naturel à traiter peut être comprise entre 10 et 200 bar. L'invention peut être mise en oeuvre pour atteindre des spécifications généralement imposées sur le gaz désacidifié, qui sont de moins de 2 % de CO₂, voire moins de 50 ppm de CO₂ pour réaliser ensuite une liquéfaction du gaz naturel et moins de 4 ppm d'H₂S, et moins de 50 ppm, voire moins de 10 ppm de soufre total.

Le procédé de désacidification selon l'invention peut par exemple être également mis en oeuvre pour désacidifier un gaz de synthèse. Le gaz de synthèse contient du monoxyde de carbone CO, de l'hydrogène H₂ (généralement dans un ratio H₂/CO égal à 2), de la vapeur d'eau (généralement à saturation à la température où le lavage est effectué) et du dioxyde de carbone CO₂ (de l'ordre de la dizaine de pourcents). La pression est généralement comprise entre 20 et 30 bar, mais peut atteindre jusqu'à 70 bar. Il peut contenir, en outre, des impuretés soufrées (H₂S, COS, etc.), azotées (NH₃, HCN) et halogénées.

### Exemple

L'exemple ci-dessous est un exemple d'application de l'invention.

Cet exemple porte sur le captage de CO₂. Selon cet exemple, on traite des fumées de combustion par une solution absorbante démixante, selon l'installation représentée à la figure 1. L'installation de désacidification traite les fumées d'une centrale électrique au charbon de 620 MWe. L'installation de désacidification permet de capter 90% du CO₂ issu des fumées de la centrale, soit environ 440 t/h de CO₂ capté. Les principales caractéristiques des fumées à traiter sont récapitulées dans le tableau 1 ci-dessous.

**Tableau 1**

| | |
|---|---|
| Débit fumées (Nm³/h) | 1 911 000 |
| Température (°C) | 45,0 |
| Pression (atm) | 1,0 |

| Composition (% vol) | |
|---|---|
| CO₂ | 13,04 |
| N₂ | 71,83 |
| Ar | 0,92 |
| O₂ | 4,63 |
| H₂O | 9,59 |

Pour cette installation de captage de CO₂, quatre colonnes d'absorption et deux colonnes de régénération en parallèle sont mises en oeuvre afin de ne pas dépasser 10 mètres de diamètre pour les colonnes. Le Tableau 2 ci-dessous présente les principales caractéristiques de l'installation de captage de CO₂.

**Tableau 2**

| | |
|---|---|
| Nombre absorbeurs | 4 |
| Nombre régénérateurs | 2 |
| Diamètre absorbeur (m) | 8,9 |
| Diamètre régénérateur (m) | 8,5 |

Le débit de solution absorbante entrant dans chaque colonne de régénération est d'environ 2600 t/h. Les colonnes de régénération fonctionnent à une pression d'environ 5,0 bara, et chaque colonne de régénération est équipée de cinq rebouilleurs. Le tableau 3 ci-dessous présente les conditions opératoires en entrée et en sortie d'un rebouilleur.

**Tableau 3**

| | Paramètres | Entrée | Sortie |
|---|---|---|---|
| Phase totale (mixte : liquide + gaz) | Température (°C) | 137,8 | 145,7 |
| | Débit volumique (m³/h) | 352,7 | 8560,9 |
| | Densité (kg/m³) | 867,5 | 35,7 |
| Phase liquide | Débit volumique (m³/h) | 352,7 | 317,2 |
| | Densité (kg/m³) | 867,5 | 853,5 |
| Phase gaz | Débit volumique (m³/h) | - | 8243,7 |
| | Densité (kg/m³) | - | 4,3 |

La solution absorbante étant une solution démixante, il y a un risque de décantation dans la garde hydraulique de la colonne de régénération. Pour éviter ce phénomène, l'injection de vapeur selon l'invention est mis en oeuvre, avec un injecteur tel que décrit en relation avec la figure 3.

Si l'on injecte la totalité de la vapeur issue des rebouilleurs dans les colonnes de régénération, une vitesse superficielle en fût vide d'environ 36 cm/s est obtenue. Cette vitesse est compatible avec les conditions de brassage liquide recherchées dans la garde hydraulique. Une partie de la vapeur peut éventuellement être renvoyée directement dans la colonne comme décrit en figure 2, afin de limiter la vitesse gaz. Par exemple, seule la moitié de la vapeur peut être injectée en fond de garde hydraulique. Cela permet d'obtenir une vitesse superficielle gaz suffisante, d'environ 18 cm/s, pour créer des boucles de circulation liquide et mélanger le liquide de la garde hydraulique, tout en limitant les pertes de charges par friction.

Avantageusement, l'ajout d'une pompe sur la sortie liquide entre le fond de la colonne de régénération et le rebouilleur n'est pas nécessaire. L'effet thermosiphon, tel que décrit en relation avec la figure 2, peut être suffisant à assurer la circulation des flux de solution absorbante régénérée entrant et sortant des rebouilleurs.

Le bilan pression ci-dessous illustre l'utilisation possible de cet effet thermosiphon. Les principales hypothèses retenues pour l'étude sont présentées dans le tableau 4 ci-dessous.

**Tableau 4**

| | |
|---|---|
| Pertes de charge rebouilleur (bara) | 0,2 |
| Perte de charge système d'injection (bara) | 0,1 |
| Marge retenue (bara) | 0,2 |
| Hauteur garde hydraulique (m) | 4,2 |

Les hauteurs H₁ et H₂, décrites en rapport avec la figure 2, obtenues pour que la circulation des fluides entre la colonne de régénération et le rebouilleur se fasse de manière gravitaire sans recours à une pompe sont présentées dans le tableau 5 ci-dessous.

**Tableau 5**

| | |
|---|---|
| H₁ (m) | 3,0 |
| H₂ (m) | 3,0 |

Ainsi en surélevant la colonne de régénération de 3 mètres par rapport aux rebouilleurs et en espaçant le niveau haut de la garde hydraulique de 3 mètre, par rapport au plateau de soutirage, l'effet thermosiphon est obtenu selon cet exemple.

## Revendications

1. Procédé de désacidification d'un effluent gazeux comportant des composés acides, tels que du CO₂ et/ou de l'H₂S, dans lequel :
a) on met en contact l'effluent gazeux avec une solution absorbante dans une colonne d'absorption (B), de manière à obtenir un effluent gazeux appauvri en composés acides et une solution absorbante chargée en composés acides, la solution absorbante étant choisie pour sa propriété à former deux phases liquides séparables lorsqu'elle a absorbé une quantité de composés acides et qu'elle est chauffée,
b) on sépare la solution absorbante chargée en composés acides en une première fraction liquide appauvrie en composés acides et en une deuxième fraction liquide enrichie en composés acides,
c) on régénère la deuxième fraction liquide dans une colonne de régénération (G) de manière à libérer une partie des composés acides et à obtenir une solution absorbante régénérée, par une injection de vapeur issue de la vaporisation partielle dans un rebouilleur (203) d'une première partie de la solution absorbante régénérée soutirée de la colonne de régénération, ladite injection de vapeur étant réalisée dans un réservoir de liquide formé par une deuxième partie de la solution absorbante régénérée situé en fond de la colonne de régénération de manière à assurer un brassage de ladite deuxième partie de la solution absorbante régénérée,
d) on recycle la première fraction liquide obtenue à l'étape b) et la solution absorbante régénérée obtenue à l'étape c), en tant que solution absorbante à l'étape a).

2. Procédé selon la revendication 1, dans lequel la vapeur est injectée au fond du réservoir de liquide.

3. Procédé selon l'une des revendications 1 et 2, dans lequel la première partie de la solution absorbante régénérée est soutirée d'un plateau (P) situé au-dessus du réservoir de liquide (202).

4. Procédé selon l'une des revendications précédentes, dans lequel la vapeur est injectée dans le réservoir de liquide à une vitesse superficielle comprise entre 1 cm/s et 1 m/s.

5. Procédé selon l'une des revendications précédentes, dans lequel la vapeur est injectée dans le réservoir de liquide (202) à une vitesse superficielle donnée, et dans lequel on contrôle ladite vitesse superficielle en séparant la solution absorbante partiellement vaporisée issue du rebouilleur (203) en un premier flux constituant la vapeur injectée dans le réservoir de liquide (202) et en un deuxième flux de vapeur injectée au-dessus du réservoir de liquide (202), et en régulant lesdits premier et deuxième flux.

6. Procédé selon l'une des revendications précédentes, dans lequel la circulation de la solution absorbante régénérée entre la colonne de régénération et le rebouilleur est assurée par un effet de thermosiphon.

7. Procédé selon la revendication 5, dans lequel on régule ledit effet de thermosiphon en faisant varier une première hauteur H₁ définie par la différence de niveau entre un plateau de soutirage (P) duquel est soutiré ladite première partie de la solution absorbante régénérée et le sommet du réservoir de liquide (202), et/ou en faisant varier une deuxième hauteur H₂ définie par la différence de niveau entre le point d'injection de la vapeur dans le réservoir de liquide (202) et le point d'injection de ladite première partie de la solution absorbante régénérée dans le rebouilleur (203).

8. Procédé selon l'une des revendications précédentes, dans lequel, préalablement à l'étape de séparation b), on chauffe la solution absorbante chargée en composés acides, de préférence à une température comprise entre 60°C et 140°C, de manière à ce que la solution absorbante forme deux fractions liquides séparables.

9. Procédé selon l'une des revendications précédentes, dans lequel la solution absorbante comprend entre 10 % et 90 % en poids d'au moins un composé réactif réagissant avec au moins un desdits composés acides, et entre 10 % et 90 % en poids d'eau.

10. Procédé selon la revendication 8, dans lequel ledit composé réactif est une amine, de préférence choisie dans le groupe constitué par la N,N,N',N'-Tétraméthylhexane-1,6-diamine (TMHDA), la N,Ndiethylethanolamine (DEEA), la N,N,N',N'-TetraEthylDiEthyleneTriAmine (TEDETA), la N,N,N'-TriEthylEthyleneDiAmine (TEEDA), la N-DiisoPropylEthyleneDiAmine (DIPEDA), la N,N,N',N'-TetraMethylDiPropyleneTriAmine (TMDPTA), la N,N,N',N',N"-PentaMethylDiPropyleneTriAmine (PMDPTA).

11. Procédé selon l'une des revendications précédentes, dans lequel l'effluent gazeux est choisi parmi le gaz naturel, les gaz de synthèse, les fumées de combustion, les fumées de hauts-fourneaux, les gaz de raffinerie tels que le gaz de synthèse, les gaz produits par craquage, les gaz combustibles, les gaz acides issus d'une unité aux amines, les gaz issus d'une unité de réduction en queue du procédé Claus, les gaz de fermentation de biomasse, les gaz de cimenterie, les fumées d'incinérateur.

12. Procédé selon l'une des revendications précédentes, pour le captage du CO₂, de préférence contenu dans des fumées de combustion.

13. Dispositif de désacidification d'un effluent gazeux comportant des composés acides, tels que du CO₂ et/ou de l'H₂S, pour mettre en oeuvre le procédé selon l'une des revendications précédentes, comportant :
- une colonne d'absorption (B) pour mettre en contact l'effluent gazeux avec une solution absorbante afin de produire un gaz désacidifié et une solution absorbante chargée en composés acides, la solution absorbante étant choisie pour sa propriété à former deux phases liquides séparables lorsqu'elle a absorbé une quantité de composés acides et qu'elle est chauffée ;
- des moyens de séparation (BS) pour séparer la solution absorbante chargée en composés acides en une première fraction liquide de solution absorbante appauvrie en composés acides et une deuxième fraction liquide de solution absorbante enrichie en composés acides ;
- une colonne de régénération (G) pour libérer les composés acides contenus dans ladite deuxième fraction liquide et pour produire une solution absorbante régénérée, ladite colonne de régénération (G) étant équipée d'au moins un rebouilleur (203) pour former de la vapeur par vaporisation partielle d'une première partie de la solution absorbante régénérée soutirée de la colonne de régénération (G), et ladite colonne de régénération (G) comprenant un réservoir de liquide (202) en fond de colonne formé par au moins une deuxième partie de la solution absorbante régénérée, et un injecteur de vapeur (204) immergé dans ledit réservoir de liquide (202) pour injecter ladite vapeur dans ledit réservoir (202) ;
- des moyens pour recycler ladite première fraction liquide issue des moyens de séparation (BS) et la solution absorbante régénérée issue de la colonne de régénération (G) en tant que solution absorbante dans la colonne d'absorption (B).

14. Dispositif selon la revendication 13, comprenant un plateau de soutirage (205) positionné au-dessus du réservoir de liquide (202) pour recueillir ladite première partie de la solution absorbante régénérée, et une conduite (220) comportant une entrée débouchant au niveau dudit plateau (205) pour envoyer ladite première partie de solution vers le rebouilleur (203).

15. Dispositif selon l'une des revendications 13 et 14, comprenant une conduite principale (221) reliant ledit rebouilleur (203) audit injecteur de vapeur (204) afin d'envoyer un premier flux de vapeur dans le réservoir de liquide (202), et une conduite de dérivation (222) installée sur la conduite principale (221) pour envoyer une deuxième flux de vapeur au-dessus du réservoir de liquide (202), ladite conduite de dérivation étant munie d'une vanne.

## Patentansprüche

1. Verfahren zur Entsäuerung eines gasförmigen Abstroms, der saure Verbindungen umfasst, wie CO₂ und/oder H₂S, wobei:
a) der gasförmige Abstrom mit einer absorbierenden Lösung in einer Absorptionssäule (B) in Kontakt gebracht wird, um einen gasförmigen Abstrom, der an sauren Verbindungen verarmt ist, und eine absorbierende Lösung, die mit sauren Verbindungen beladen ist, zu erhalten, wobei die absorbierende Lösung aufgrund ihrer Eigenschaft zur Bildung von zwei trennbaren flüssigen Phasen ausgewählt wird, wenn sie eine Menge an sauren Verbindungen absorbiert hat, und wenn sie erhitzt wird,
b) die absorbierende Lösung, die mit sauren Verbindungen beladen ist, in eine erste Flüssigfraktion, die an sauren Verbindungen verarmt ist, und in eine zweite Flüssigfraktion, die mit sauren Verbindungen angereichert ist, getrennt wird,
c) die zweite Flüssigfraktion in einer Regenerationssäule (G) regeneriert wird, um einen Teil der sauren Verbindungen freizusetzen, und um eine regenerierte absorbierende Lösung zu erhalten, durch Einspritzen von Dampf, der aus der teilweisen Verdampfung, in einem Verdampfer (203), eines ersten Teils der regenerierten absorbierenden Lösung stammt, die aus der Regenerationssäule abgezogen wird, wobei das Einspritzen von Dampf in einem Behälter für Flüssigkeit durchgeführt wird, die aus einem zweiten Teil der regenerierten absorbierenden Lösung gebildet ist, der am Boden der Regenerationssäule angeordnet ist, um ein Rühren des zweiten Teils der regenerierten absorbierenden Lösung sicherzustellen,
d) die erste Flüssigfraktion, die in Schritt b) erhalten wird, und die regenerierte absorbierende Lösung, die in Schritt c) erhalten wird, werden als absorbierende Lösung zum Schritt a) zurückgeführt.

2. Verfahren nach Anspruch 1, wobei der Dampf am Boden des Flüssigkeitsbehälters eingespritzt wird.

3. Verfahren nach einem der Ansprüche 1 und 2, wobei der erste Teil der regenerierten absorbierenden Lösung aus einer Platte (P) abgezogen wird, die über dem Flüssigkeitsbehälter (202) angeordnet ist.

4. Verfahren nach einem der vorhergehenden Ansprüche, wobei der Dampf in den Flüssigkeitsbehälter mit einer Oberflächengeschwindigkeit zwischen 1 cm/s und 1 m/s eingespritzt wird.

5. Verfahren nach einem der vorhergehenden Ansprüche, wobei der Dampf in den Flüssigkeitsbehälter (202) mit einer gegebenen Oberflächengeschwindigkeit eingespritzt wird, und wobei die Oberflächengeschwindigkeit gesteuert wird, indem die teilweise verdampfte absorbierende Lösung, die aus dem Verdampfer (203) stammt, in einen ersten Strom, der den in den Flüssigkeitsbehälter (202) eingespritzten Dampf bildet, und in einen zweiten Dampfstrom, der über dem Flüssigkeitsbehälter (202) eingespritzt wird, getrennt wird, und indem der erste und der zweite Strom reguliert werden.

6. Verfahren nach einem der vorhergehenden Ansprüche, wobei die Zirkulation der regenerierten absorbierenden Lösung zwischen der Regenerationssäule und dem Verdampfer durch einen Thermosiphoneffekt sichergestellt wird.

7. Verfahren nach Anspruch 5, wobei der Thermosiphoneffekt reguliert wird, indem eine erste Höhe H₁ variiert wird, die durch die Differenz des Niveaus zwischen einer Entnahmeplatte (P), von welcher der erste Teil der regenerierten absorbierenden Lösung abgezogen wird, und der Oberseite des Flüssigkeitsbehälters (202) definiert wird, und/oder indem eine zweite Höhe H₂ variiert wird, die durch die Differenz des Niveaus zwischen dem Einspritzpunkt des Dampfs in den Flüssigkeitsbehälter (202) und dem Einspritzpunkt des ersten Teils der regenerierten absorbierenden Lösung in den Verdampfer (203) definiert wird.

8. Verfahren nach einem der vorhergehenden Ansprüche, wobei, vor dem Trennschritt b), die absorbierende Lösung, die mit sauren Verbindungen beladen ist, vorzugsweise auf eine Temperatur zwischen 60 °C und 140 °C erhitzt wird, damit die absorbierende Lösung zwei trennbare Flüssigfraktionen bildet.

9. Verfahren nach einem der vorhergehenden Ansprüche, wobei die absorbierende Lösung zwischen 10 Gew.-% und 90 Gew.-% mindestens einer reaktiven Verbindung, die mit mindestens einer der sauren Verbindungen reagiert, und zwischen 10 Gew.-% und 90 Gew.-% Wasser umfasst.

10. Verfahren nach Anspruch 8, wobei die reaktive Verbindung ein Amin ist, vorzugsweise ausgewählt aus der Gruppe bestehend aus N,N,N',N'-Tetramethylhexan-1,6-diamin (TMHDA), N,N-Diethylethanolamin (DEEA), N,N,N',N'-Tetraethyldiethylentriamin (TEDETA), N,N,N'-Triethylethylendiamin (TEEDA), N-Diisopropylethylendiamin (DIPEDA), N,N,N',N'-Tetramethyldipropylentriamin (TMDPTA), N,N,N',N',N'-Pentamethyldipropylentriamin (PMDPTA).

11. Verfahren nach einem der vorhergehenden Ansprüche, wobei der gasförmige Abstrom ausgewählt wird aus Naturgas, Synthesegas, Verbrennungsgasen, Hochofengasen, Raffineriegasen, wie Synthesegas, Gasen, die durch Kracken erzeugt werden, brennbaren Gasen, sauren Gasen, die aus einer Einheit mit Aminen stammen, Gasen, die aus einer Reduktionsabfolgeeinheit des Claus-Verfahrens stammen, Gasen aus der Fermentation von Biomasse, Gasen aus Zementwerken, Gasen aus Müllverbrennungsanlagen.

12. Verfahren nach einem der vorhergehenden Ansprüche, zum Einfangen von CO₂, das vorzugsweise in Verbrennungsgasen enthalten ist.

13. Vorrichtung zur Entsäuerung eines gasförmigen Abstroms, der saure Verbindungen umfasst, wie CO₂ und/oder H₂S, um das Verfahren nach einem der vorhergehenden Ansprüche durchzuführen, umfassend:
- eine Absorptionssäule (B), um den gasförmigen Abstrom mit einer absorbierenden Lösung in Kontakt zu bringen, um ein entsäuertes Gas und eine absorbierende Lösung, die mit sauren Verbindungen beladen ist, zu erhalten, wobei die absorbierende Lösung aufgrund ihrer Eigenschaft zur Bildung von zwei trennbaren flüssigen Phasen ausgewählt wird, wenn sie eine Menge an sauren Verbindungen absorbiert hat, und wenn sie erhitzt wird,
- Trennmittel (BS), um die absorbierende Lösung, die mit sauren Verbindungen beladen ist, in eine erste Flüssigfraktion der absorbierenden Lösung, die an sauren Verbindungen verarmt ist, und in eine zweite Flüssigfraktion der absorbierenden Lösung, die mit sauren Verbindungen angereichert ist, zu trennen,
- eine Regenerationssäule (G), um die sauren Verbindungen freizusetzen, die in der zweiten Flüssigfraktion enthalten sind, und um eine regenerierte absorbierende Lösung zu erzeugen, wobei die Regenerationssäule (G) mit mindestens einem Verdampfer (203) ausgestattet ist, um Dampf durch teilweises Verdampfen eines ersten Teils der regenerierten absorbierenden Lösung zu bilden, die aus der Regenerationssäule (G) abgezogen wird, und wobei die Regenerationssäule (G) einen Behälter (202) für Flüssigkeit am Boden der Säule umfasst, die aus mindestens einem zweiten Teil der regenerierten absorbierenden Lösung gebildet ist, und einen Dampfinjektor (204), der in dem Flüssigkeitsbehälter (202) eingetaucht ist, um den Dampf in den Behälter (202) einzuspritzen,
- Mittel zum Rückführen der ersten Flüssigfraktion, die aus den Trennmitteln (BS) erhalten wird, und der regenerierten absorbierenden Lösung, die aus der Regenerationssäule (G) stammt, als absorbierende Lösung zur Absorptionssäule (B).

14. Vorrichtung nach Anspruch 13, umfassend eine Entnahmeplatte (205), die über dem Flüssigkeitsbehälter (202) positioniert ist, um den ersten Teil der regenerierten absorbierenden Lösung aufzunehmen, und eine Leitung (220), umfassend einen Eingang, der auf der Höhe der Platte (205) einmündet, um den ersten Teil der Lösung zum Verdampfer (203) zu schicken.

15. Vorrichtung nach einem der Ansprüche 13 und 14, umfassend eine Hauptleitung (221), die den Verdampfer (203) mit dem Dampfinjektor (204) verbindet, um einen ersten Dampfstrom in den Flüssigkeitsbehälter (202) zu schicken, und eine Umgehungsleitung (222), die an der Hauptleitung (221) installiert ist, um einen zweiten Dampfstrom über den Flüssigkeitsbehälter (202) zu schicken, wobei die Umgehungsleitung mit einem Ventil versehen ist.

## Claims

1. A method of deacidizing a gaseous effluent containing acid compounds, such as CO₂ and/or H₂S, wherein:
a) the gaseous effluent is contacted with an absorbent solution in an absorption column (B) to obtain a gaseous effluent depleted of acid compounds and an absorbent solution laden with acid compounds, the absorbent solution being selected for its property to form two separable liquid phases when it has absorbed an amount of acid compounds and it is heated;
b) the absorbent solution laden with acid compounds is separated into a first liquid fraction depleted of acid compounds and a second liquid fraction enriched with acid compounds;
c) the second liquid fraction is regenerated in a regeneration column (G) to release part of the acid compounds and to obtain a regenerated absorbent solution, by injecting vapor resulting from the partial vaporization in a reboiler (203) of a first part of the regenerated absorbent solution withdrawn from the regeneration column, the vapor injection being in a liquid reserve including a second part of the regenerated absorbent solution located in a bottom of the regeneration column to provide stirring of the second part of the regenerated absorbent solution; and
d) the first liquid fraction obtained in stage b) and the regenerated absorbent solution obtained in stage c) are recycled as the absorbent solution to stage a).

2. A method as claimed in claim 1, wherein the vapor is injected in the bottom of the liquid reserve.

3. A method as claimed in either of claims 1 and 2, wherein the first part of the regenerated absorbent solution is withdrawn from a tray (P) located above the liquid reserve (202).

4. A method as claimed in one of the preceding claims, wherein the vapor is injected into the liquid reserve at a superficial velocity ranging between 1 cm/s and 1 m/s.

5. A method as claimed in one of the preceding claims, wherein the vapor is injected into the liquid reserve (202) at a given superficial velocity and the superficial velocity is controlled by separating the partly vaporized absorbent solution from the reboiler (203) into a first stream forming the vapor injected into the liquid reserve (202) and into a second vapor stream injected above the liquid reserve (202), and by controlling the first and second streams.

6. A method as claimed in one of the preceding claims, wherein circulation of the regenerated absorbent solution located between the regeneration column and the reboiler is provided by a thermosiphon effect.

7. A method as claimed in claim 5, wherein the thermosiphon effect is controlled by varying a first height H₁ defined by the difference in level between a draw-off tray (P) from which the first part of the regenerated absorbent solution is withdrawn and the top of the liquid reserve (202), and/or by varying a second height H₂ defined by the difference in level between the point of injection of the vapor into the liquid reserve (202) and the point of injection of the first part of the regenerated absorbent solution into the reboiler (203).

8. A method as claimed in one of the preceding claims, wherein, prior to separation stage b), the absorbent solution laden with acid compounds is heated, preferably to a temperature ranging between 60°C and 140°C, so that the absorbent solution forms two separable liquid fractions.

9. A method as claimed in one of the preceding claims, wherein the absorbent solution comprises between 10 wt. % and 90 wt. % of at least one reactive compound reacting with at least one of the acid compounds, and between 10 wt. % and 90 wt. % of water.

10. A method as claimed in claim 8, wherein the reactive compound is an amine, preferably selected from the group made up of N,N,N',N'-TetraMethylHexane-1,6-DiAmine (TMHDA), N,N-DiEthylEthanolAmine (DEEA), N,N,N',N'-TetraEthyl-DiEthyleneTriAmine (TEDETA), N,N,N'-TriEthylEthyleneDiAmine (TEEDA), N-DilsoPropylEthyleneDiAmine (DIPEDA), N,N,N',N'-TetraMethylDiPropyleneTriAmine (TMDPTA), N,N,N',N',N"-PentaMethylDiPropyleneTriAmine (PMDPTA).

11. A method as claimed in one of the preceding claims, wherein the gaseous effluent is selected from among natural gas, syngas, combustion fumes, blast furnace fumes, refinery gas such as syngas, cracked gas, fuel gas, acid gas from amine units, Claus tail gas, biomass fermentation gas, cement plant gas and incinerator fumes.

12. A method as claimed in one of the preceding claims, comprising capturing CO₂, preferably contained in combustion fumes.

13. A device for deacidizing a gaseous effluent comprising acid compounds, such as CO₂ and/or H₂S, for implementing the method as claimed in one of the preceding claims, comprising:
- an absorption column (B) for contacting the gaseous effluent with an absorbent solution to produce a deacidized gas and an absorbent solution laden with acid compounds, the absorbent solution being selected for its property to form two separable liquid phases when it has absorbed an amount of acid compounds and it is heated;
- a separation means (BS) for separating the absorbent solution laden with acid compounds into a first liquid fraction of absorbent solution depleted of acid compounds and a second liquid fraction of absorbent solution enriched with acid compounds;
- a regeneration column (G) for releasing the acid compounds contained in the second liquid fraction and for producing a regenerated absorbent solution, the regeneration column (G) being equipped with at least one reboiler (203) for forming vapor through partial vaporization of a first part of the regenerated absorbent solution withdrawn from the regeneration column (G), and the regeneration column (G) comprising a liquid reserve (202) in a bottom of the column having at least a second part of the regenerated absorbent solution, and a vapor injector (204) immersed in the liquid reserve (202) for injecting the vapor into the reserve (202);
- means for recycling the first liquid fraction from the separation means (BS) and the regenerated absorbent solution from the regeneration column (G) as the absorbent solution to the absorption column (B).

14. A device as claimed in claim 13, comprising a draw-off tray (205) positioned above the liquid reserve (202) for collecting the first part of the regenerated absorbent solution, and a line (220) with an inlet opening into the tray (205) for sending the first part of the solution to the reboiler (203).

15. A device as claimed in either of claims 13 and 14, comprising a main line (221) connecting the reboiler (203) to the vapor injector (204) for sending a first vapor stream into the liquid reserve (202), and a bypass line (222) arranged on the main line (221) for sending a second vapor stream above the liquid reserve (202), the bypass line being provided with a valve.
